# EUROPÄISCHE PATENTANMELDUNG

(11) **EP 1 880 784 A2**
(43) Veröffentlichungstag der Anmeldung: **23.01.2008**
(21) Anmeldenummer: 07013646.0
(22) Anmeldetag: 12.07.2007
(51) Int. Cl.: B22D 19/00, B62D 25/08

(54) **Verbund aus einem Leichtmetallgussbauteil und einem Stahlbauteil**

(30) Priorität: 21.07.2006 DE 102006033770
(71) Anmelder: Bayerische Motoren Werke Aktiengesellschaft, 80809 München (DE)
(72) Erfinder: Zehetbauer, Thomas, 81373 München (DE); Hofmann, Max, 92339 Beilngries (DE)

(57) **Zusammenfassung**

Es ist ein Verbund aus mindestens einem Leichtmetallbauteil und mindestens einem daran angeordneten Zusatzteil aus einem Eisenwerkstoff bekannt. Das Zusatzteil ist mit mindestens einem Stahlbauteil verschweißbar. Das Leichtmetallbauteil und das Zusatzteil sind durch Druckfügen und / oder Stanznieten miteinander verbunden. Aufgabe der Erfindung ist es, einen Verbund aus mindestens einem Leichtmetallbauteil und mindestens einem Stahlbauteil zu schaffen, der keine aufwendigen Korrosionsschutzmaßnahmen erfordert.

Der erfindungsgemäße Verbund besteht aus mindestens einem verzinkten Stahlbauteil (7, 8), das teilweise in ein Leichtmetallgussbauteil (4) eingegossen ist. Das Stahlbauteil (7, 8) ist dadurch mit dem Leichtmetallgussbauteil (4) metallurgisch kraftschlüssig verbunden. Es sind abgesehen von der Verzinkung des Stahlbauteils (7, 8) keine Korrosionsschutzmaßnahmen erforderlich. Die Anbindung des Verbundes an andere Bauteile oder Baugruppen aus Stahl kann günstigerweise über gängige Schweißverfahren, wie beispielsweise Punktschweißen, über das Stahlbauteil erfolgen.

## Beschreibung

Die Erfindung betrifft einen Verbund aus einem Leichtmetallgussbauteil und einem Stahlbauteil nach dem Oberbegriff des Patentanspruchs 1.

Aus der DE 197 46 165 A1 ist ein Verbund aus mindestens einem Leichtmetallbauteil und mindestens einem daran angeordneten Zusatzteil aus einem Eisenwerkstoff bekannt. Das Zusatzteil ist mit mindestens einem Stahlbauteil verschweißbar. Das Leichtmetallbauteil und das Zusatzteil sind durch Druckfügen und / oder Stanznieten miteinander verbunden. Allerdings sind Leichtmetalle in der elektrischen Spannungsreihe minderwertiger als Stahl. Damit es im Kontaktbereich zwischen dem Leichtmetallbauteil und dem Zusatzbauteil nicht zu einer elektrochemischen Korrosion kommt, sind aufwendige Maßnahmen erforderlich.

Aufgabe der Erfindung ist es, einen Verbund aus mindestens einem Leichtmetallbauteil und mindestens einem Stahlbauteil zu schaffen, der keine aufwendigen Korrosionsschutzmaßnahmen erfordert.

Diese Aufgabe wird mit einem Verbund aus mindestens einem Leichtmetallbauteil und mindestens einem Stahlbauteil mit den Merkmalen des Patentanspruchs 1 gelöst. Patentanspruch 8 bezieht sich auf ein Verfahren zur Herstellung eines solchen Verbundes.

Der erfindungsgemäße Verbund besteht aus mindestens einem verzinkten Stahlbauteil, das teilweise in ein Leichtmetallgussbauteil eingegossen ist. Das Stahlbauteil ist dadurch mit dem Leichtmetallgussbauteil metallurgisch kraftschlüssig verbunden. Es sind abgesehen von der Verzinkung des Stahlbauteils keine aufwendigen Korrosionsschutzmaßnahmen erforderlich. Zudem stellt die Verzinkung sicher, dass eine kraftschlüssige Verbindung zwischen dem Stahlbauteil und dem Leichtmetallgussbauteil entsteht.

Die Anbindung des Verbundes an andere Bauteile oder Baugruppen aus Stahl kann günstigerweise über gängige, kostengünstige und zeitoptimierte Schweißverfahren, wie beispielsweise Punktschweißen, über das Stahlbauteil erfolgen.

Die Vorteile von Leichtmetallgussbauteilen können im Verbund voll ausgenutzt werden. So weist ein Leichtmetallgussbauteil gegenüber einem vergleichbaren Stahlbauteil ein geringeres Gewicht und eine kleinere Bauteilgröße auf. Auch kann vorteilhafterweise in das Leichtmetallgussbauteil zumindest eine Anbindungsstelle für ein Anbauteil praktisch ohne Mehrkosten und ohne zusätzlichen Aufwand integriert sein.

Besonders deutlich werden die Vorteile des erfindungsgemäßen Verbundes, wenn es sich bei dem Leichtmetallbauteil um eine Federbeinaufnahme einer Kraftfahrzeugkarosserie handelt. Die Stahlbauteile können dann Stahlbleche sein, die zum Verschweißen der Federbeinaufnahme mit der restlichen Kraftfahrzeugkarosserie dienen. In die Federbeinaufnahme können alle erforderlichen Anbindungsstellen für Anbauteile integriert sein. Dadurch können zusätzliche Halter und Vorrichtungen entfallen, die bei einer Federbeinaufnahme aus einem konventionellen Blechbauteil erforderlich sind, um die Anbauteile daran befestigen zu können. Auch weist die Federbeinaufnahme günstigerweise Versteifungsrippen auf. So kann die Federbeinaufnahme auch bei einer kompakten Bauweise eine hohe Steifigkeit und Festigkeit aufweisen. Sie kann in Fahrzeuglängs- und -querrichtung kleiner als eine vergleichbare konventionelle Federbeinaufnahme aus einem Stahlblech sein und dennoch eine vergleichbare Steifigkeit und Festigkeit aufweisen.

Vorteilhafterweise bestehen außer den Federbeinaufnahmen alle tragenden Bauteile eines Vorderwagens der Kraftfahrzeugkarosserie aus einem Eisenwerkstoff. Als Vorderwagen einer Kraftfahrzeugkarosserie wird üblicherweise der gesamte Bereich der Kraftfahrzeugkarosserie bezeichnet, der sich in Fahrtrichtung gesehen vor einer Fahrgastzelle befindet. Üblicherweise wird ein Vorderwagen zumindest gebildet von Motorträgern, Federbeinaufnahmen und einer Achsaufnahme, sowie von einer Reihe zusätzlicher Bauteile, die beispielsweise zur Anbindung der Außenhautteile wie beispielsweise eines Kotflügels erforderlich sind. Die konventionelle Herstellung eines Vorderwagens mit tragenden Bauteilen, die nur aus einem Eisenwerkstoff bestehen, ist kostengünstig und bewährt. Auch ist das Fügen der tragenden Bauteile miteinander durch Schweißverbindungen einfach und preiswert. Allerdings ist ein solcher Vorderwagen mit tragenden Bauteilen nur aus Eisenwerkstoffen schwer im Vergleich zu einem Vorderwagen, dessen tragenden Bauteile alle aus Aluminium bestehen. Ein Vorderwagen mit tragenden Bauteilen aus Aluminium dagegen geht einher mit hohen Materialkosten und aufwendigeren Fügeverfahren. Ein Vorderwagen mit Federbeinaufnahmen aus einem Leichtmetall und allen anderen tragenden Bauteilen aus einem Eisenwerkstoff vereint die Vorteile. So ist gerade bei den Federbeinaufnahmen aus Leichtmetall die Gewichtsersparnis im Vergleich zu Federbeinaufnahmen aus einem Eisenwerkstoff besonders groß. Andererseits kann der Vorderwagen bis auf die Federbeinaufnahmen konventionell zusammengeschweißt werden. Aufgrund des Verbundes der Federbeinaufnahmen mit den eingegossenen Stahblechen können auch diese über die Stahlbleche auf bewährte Weise mit der restlichen Karosserie verschweißt werden.

Zur Herstellung eines solchen Verbunds aus einem Leichtmetallbauteil und mindestens einem Stahlbauteil muss gemäß Patentanspruch 8 zunächst das Stahlbauteil verzinkt werden, das dann in eine Gussform für das Leichtmetallbauteil eingelegt werden muss, bevor abschließend das Leichtmetallbauteil gegossen wird, sodass ein Teil des verzinkten Stahlbauteils mit eingegossen ist.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: eine perspektivische Ansicht eines Teils eines Vorderwagens einer Kraftfahrzeugkarosserie und
- Fig. 2: eine vergrößerte Ansicht der in Fig. 1 gezeigten Federbeinaufnahme.

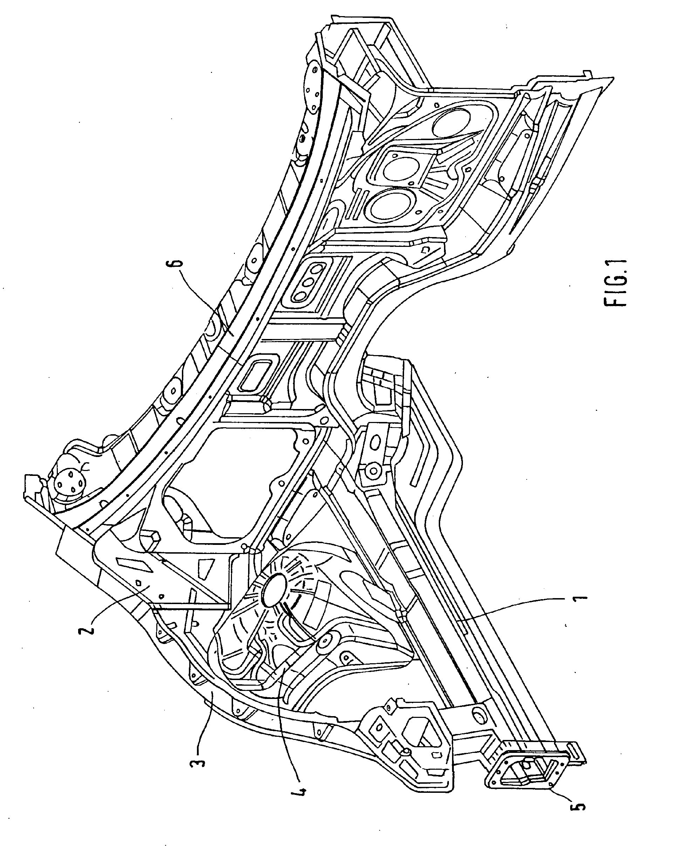

In Fig. 1 ist ein Teil eines Vorderwagens einer Kraftfahrzeugkarosserie eines Personenkraftwagens dargestellt. Zu sehen ist ein Motorträger 1, der sich in Fahrzeuglängsrichtung nach vorne erstreckt. An seinem vorderen Ende ist eine Aufnahme 5 angebracht, an der ein Stossfänger befestigbar ist. Nach hinten erstreckt sich der Motorträger 1 etwa bis in den Bereich einer Stirnwand, die sich von einem unteren Windlauf 6, der die untere Begrenzung der Frontscheibe bildet, nach unten zum Fahrzeugboden erstreckt, und die Fahrgastzelle vom Vorderwagen trennt. Der Motorträger 1 setzt sich nach hinten unterhalb der Stirnwand und unter dem Fahrzeugboden als Längsträger fort. Oberhalb des Motorträgers 1 und zur Fahrzeugaußenseite versetzt verläuft von einer A-Säule 2 der Kraftfahrzeugkarosserie ebenfalls nach vorne ein Stützträger 3, dessen vorderes Ende mit dem Motorträger 1 verbunden ist. Die A-Säule 2 bildet die seitliche vordere Begrenzung der Fahrgastzelle. Sie stellt zugleich nach oben hin die seitliche Begrenzung der Frontscheibe dar. Der untere Windlauf 6 ist mit seinem eine Ende an der dargestellten A-Säule 2 angeschweißt. Zwischen dem Motorträger 1 und dem Stützträger 3 befindet sich eine Federbeinaufnahme 4, die sowohl mit dem Motorträger 1 als auch mit dem Stützträger 3 verbunden ist. Die Federbeinaufnahme 4 dient zur Befestigung eines Endes eines Federbeins, das ein Teil des Fahrwerks des Personenkraftwagens ist.

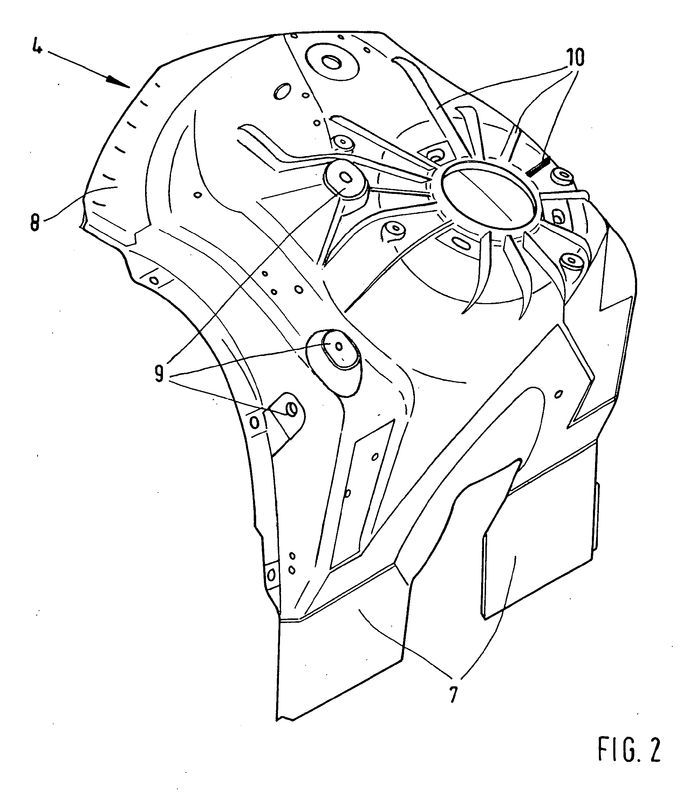

Der Motorträger 1 und der Stützträger 3 wie auch alle weiteren tragenden Bauteile des Vorderwagens außer den Federbeinaufnahmen 4 bestehen konventionell aus Stahlblech und sind auf bewährte Weise miteinander verschweißt. Nur die Federbeinaufnahme 4 ist ein Gussteil aus einer Aluminiumlegierung und kann daher nicht mit dem Motorträger 1 und mit dem Stützträger 3 verschweißt werden. Zur Verbindung der Federbeinaufnahme 4 mit dem Motorträger 1 sind in die Federbeinaufnahme 4 - wie in Fig. 2 dargestellt - mehrere Stahlbauteile 7, 8 teilweise eingegossen, die eine metallurgisch kraftschlüssige Verbindung mit der Federbeinaufnahme 4 bilden. Die aus der Federbeinaufnahme 4 herausragenden, beziehungsweise nicht umgossenen Abschnitte der Stahlbauteile 7, 8 können auf konventionelle Weise mit der restlichen Fahrzeugkarosserie verschweißt werden. So kann auch der Verbund aus der Federbeinaufnahme 4 mit den teilweise eingegossenen Stahlbauteilen 7, 8 wie ein Stahlbauteil mit der restlichen Karosserie gefügt werden. Die beiden Stahlbauteile 7 dienen dabei zum Verschweißen der Federbeinaufnahme 4 mit dem Motorträger 1, das Stahlbauteil 8 zum Verschweißen mit dem Stützträger 3.

Der Einsatz des Verbunds reduziert aufgrund der Federbeinaufnahme 4 aus einer Aluminiumlegierung im Vergleich zu einer konventionellen Federbeinaufnahme aus Stahlblech deutlich das Gewicht der Fahrzeugkarosserie. Die Ausführung der Federbeinaufnahme 4 als Gussbauteil ermöglicht es zudem, alle benötigten Anbindungsstellen 9 für Anbauteile an der Federbeinaufnahme 4 direkt in das Gussbauteil zu integrieren, sodass keine zusätzlichen Bauteile wie Halter oder Aufnahmen erforderlich sind, um die Anbauteile an der Federbeinaufnahme 4 befestigen zu können. Zudem kann der Verbund mit der Federbeinaufnahme 4 als Gussbauteil beispielsweise durch das Einbringen von Verstärkungsrippen 10 kompakter gegenüber einer Federbeinaufnahme aus Stahlblech und damit bauraumoptimiert gestaltet werden. Damit kann mit dem Verbund erheblich Bauraum gewonnen werden, ohne dass damit Einbussen bezüglich der Steifigkeit oder Festigkeit verbunden wären. Hierdurch können bekannte Engstellen von Beginn an vermieden werden.

## Patentansprüche

1. Verbund aus mindestens einem Leichtmetallgussbauteil und mindestens einem Stahlbauteil (7, 8), **dadurch gekennzeichnet, dass** das Stahlbauteil (7, 8) verzinkt ist, und teilweise in das Leichtmetallgussbauteil eingegossen ist.

2. Verbund nach Anspruch 1, **dadurch gekennzeichnet, dass** der Verbund über das Stahlbauteil (7, 8) mit anderen Bauteilen oder Baugruppen aus Stahl verschweißbar ist.

3. Verbund nach Anspruch 2, **dadurch gekennzeichnet, dass** der Verbund über das Stahlbauteil (7, 8) mit anderen Bauteilen oder Baugruppen aus Stahl punktverschweißbar ist.

4. Verbund nach einem der vorhergehenden Ansprüche, **dadurch gekennzeichnet, dass** in das Leichtmetallgussbauteil zumindest eine Anbindungsstelle für Anbauteile (9) integriert ist.

5. Verbund nach einem der vorhergehenden Ansprüche, **dadurch gekennzeichnet, dass** das Leichtmetallgussbauteil Versteifungsrippen (10) aufweist.

6. Verbund nach einem der vorhergehenden Ansprüche, **dadurch gekennzeichnet, dass** das Leichtmetallbauteil eine Federbeinaufnahme (4) einer Kraftfahrzeugkarosserie bildet.

7. Verbund nach Anspruch 6, **dadurch gekennzeichnet, dass** das Stahlbauteil (7, 8) ein Stahlblech ist, das zum Verschweißen der Federbeinaufnahme (4) mit der restlichen Kraftfahrzeugkarosserie dient.

8. Verfahren zur Herstellung eines Verbunds aus einem Leichtmetallbauteil und mindestens einem Stahlbauteil (7, 8), bestehend aus folgenden Verfahrensschritten:
a) Verzinken des Stahlbauteils (7, 8),
b) Verzinktes Stahlbauteil (7, 8) in Gussform für das Leichtmetallbauteil einlegen,
c) Gießen des Leichtmetallbauteils, sodass ein Teil des verzinkten Stahlbauteils (7, 8) mit eingegossen ist.
